(19) Europäisches Patentamt
European Patent Office
Office européen des brevets

(11) **EP 3 117 274 B1**

(12) **EUROPEAN PATENT SPECIFICATION**

(45) Date of publication and mention
of the grant of the patent:
**31.01.2018 Bulletin 2018/05**

(51) Int Cl.:
**G05B 13/02** *(2006.01)*   **G06N 3/08** *(2006.01)*

(21) Application number: **15716062.3**

(22) Date of filing: **16.04.2015**

(86) International application number:
**PCT/EP2015/058239**

(87) International publication number:
**WO 2015/162050 (29.10.2015 Gazette 2015/43)**

(54) **METHOD, CONTROLLER, AND COMPUTER PROGRAM PRODUCT FOR CONTROLLING A TARGET SYSTEM BY SEPARATELY TRAINING A FIRST AND A SECOND RECURRENT NEURAL NETWORK MODELS, WHICH ARE INITALLY TRAINED USING OPARATIONAL DATA OF SOURCE SYSTEMS**

VERFAHREN, STEUERGERÄT UND COMPUTERPROGRAMMPRODUKT ZUR STEUERUNG EINES ZIELSYSTEMS DURCH SEPARATES TRAINIEREN EINES ERSTEN UND EINES ZWEITEN WIEDERKEHRENDEN MODELLS EINES NEURALEN NETZES DURCH ANFÄNGLICHES TRAINIEREN MIT BETRIEBSDATEN VON QUELLSYSTEMEN

PROCÉDÉ, DISPOSITIF DE COMMANDE ET PRODUIT-PROGRAMME D'ORDINATEUR PERMETTANT DE COMMANDER UN SYSTÈME CIBLE PAR L'ENTRAÎNEMENT DISTINCT DE PREMIER ET SECOND MODÈLES DE RÉSEAUX NEURONAUX RÉCURRENTS QUI SONT INITIALEMENT ENTRAÎNÉS AU MOYEN DE DONNÉES OPÉRATIONNELLES DE SYSTÈMES SOURCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2014 US 201414258740**

(43) Date of publication of application:
**18.01.2017 Bulletin 2017/03**

(73) Proprietor: **Siemens Aktiengesellschaft 80333 München (DE)**

(72) Inventors:
• **DÜLL, Siegmund**
**80336 München (DE)**
• **SPIECKERMANN, Sigurd**
**85591 Vaterstetten (DE)**
• **UDLUFT, Steffen**
**82223 Eichenau (DE)**
• **MUNSHI, Mrinal**
**Issaquah, WA 98027 (US)**

(56) References cited:
**US-B2- 7 330 804**

• **LAI-WAN CHAN ET AL: "Training recurrent network with block-diagonal approximated Levenberg-Marquardt algorithm", NEURAL NETWORKS, 1999. IJCNN '99. INTERNATIONAL JOINT CONFERENCE ON WASHINGTON, DC, USA 10-16 JULY 1999, PISCATAWAY, NJ, USA,IEEE, US, vol. 3, 10 July 1999 (1999-07-10), pages 1521-1526, XP010372364, DOI: 10.1109/IJCNN.1999.832595 ISBN: 978-0-7803-5529-3**
• **PUSKORIUS G V ET AL: "NEUROCONTROL OF NONLINEAR DYNAMICAL SYSTEMS WITH KALMAN FILTER TRAINED RECURRENT NETWORKS", IEEE TRANSACTIONS ON NEURAL NETWORKS, IEEE SERVICE CENTER, PISCATAWAY, NJ, US, vol. 5, no. 2, 1 March 1994 (1994-03-01), pages 279-297, XP000441810, ISSN: 1045-9227, DOI: 10.1109/72.279191**
• **Lee A Feldkamp ET AL: "Enhanced Multi-Stream Kalman Filter Training for Recurrent Networks" In: "Nonlinear Modeling", 31 December 1998 (1998-12-31), Springer US, XP055190596, ISBN: 978-1-46-155703-6 pages 29-53, the whole document**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

The control of complex dynamical technical systems, for instance gas turbines, wind turbines or other plants, can be optimized by means of so-called data driven approaches. With that, various aspects of such dynamical systems can be improved, e.g. for gas turbines their efficiency, combustion dynamics, or emissions, and e.g. for wind turbines their life-time consumption, efficiency, or yaw.

Modern data driven optimization utilizes machine learning methods for improving control strategies or policies of dynamical systems with regard to general or specific optimization goals. Such machine learning methods often allow to out-perform conventional control strategies. In particular, if the controlled system is changing, an adaptive control approach capable of learning and adjusting a control strategy according to the new situation and new properties of the dynamical system is often advantageous over conventional non-learning control strategies.

However, in order to optimize complex dynamical systems, e.g. gas turbines or other plants, a sufficient amount of operational data is to be collected in order to find or learn a good control strategy. Thus, in case of commissioning a new plant, upgrading or modifying it, it may take some time to collect sufficient operational data of the new or changed system before a good control strategy is available. Reasons for such changes might be wear, changed parts after a repair, or different environmental conditions.

Known methods for machine learning comprise reinforcement learning methods which focus on data efficient learning for a specified dynamical system. However, even when using these methods it may take some time until a good data driven control strategy is available after a change of the dynamical system. Until then, the changed dynamical system operates outside a possibly optimized envelope. If the change rate of the dynamical system is very high, only sub-optimal results for a data driven optimization may be achieved since a sufficient amount of operational data may be never available.

Document US 7 330 804 B2 discloses a non-linear approximator for empirical process control. The approximator is developed based on three stages including the learning of a neural network based on empirical data.

Document Chan et al.: "Training recurrent network with block-diagonal approximated Levenberg-Marquardt algorithm", INTERNATIONAL JOINT CONFERENCE ON NEURAL NETWORKS IJCNN '99, vol. 3, 10 July 1999, pages 1521 to 1526, discloses the learning of a recurrent neural network using an approximation based on a block-diagonal matrix in the Levenberg-Marquardt method used for training the neural network.

Document Puskorius et al.: "Neurocontrol of Nonlinear Dynamical Systems with Kalman Filter Trained Recurrent Networks", IEEE TRANSACTIONS ON NEURAL NETWORKS, vol. 5, no. 2, 1 March 1994, pages 279 to 297, and document Feldkamp et al.: "Enhanced Multi-Stream Kalman Filter Training for Recurrent Networks" In: "Nonlinear Modeling", 31 December 1998, pages 29 to 53, Springer US, disclose the training of recurrent neural networks using an extended Kalman filter.

SUMMARY OF THE INVENTION

In view of the above, an object of the present invention is to create a method, a controller, and a computer program product for controlling a target system which allow a more rapid learning of control strategies in particular for a changing target system.

According to the present invention, a method, a controller, or a computer program product for controlling a target system, e.g. a gas or wind turbine or another technical system, is based on operational data of a plurality of source systems. The method, controller, or computer program product is configured to receive the operational data of the source systems, the operational data being distinguished by source system specific identifiers. By means of a neural network a neural model is trained on the basis of the received operational data of the source systems taking into account the source system specific identifiers, where a first neural model component is trained on properties shared by the source systems and a second neural model component is trained on properties varying between the source systems. After receiving operational data of the target system, the trained neural model is further trained on the basis of the operational data of the target system, where a further training of the second neural model component is given preference over a further training of the first neural model component. The target system is controlled by means of the further trained neural network.

Because the invention uses operational data of a plurality of source systems and uses neural models learned by means of these operational data one has a good starting point for a neural model of the target system. Actually, much less operational data from the target system are needed in order to obtain an accurate neural model for the target system than in the case of learning a neural model for the target system from scratch. Hence, effective control strategies or policies can be learned in short time even for target systems with scarce data.

In a preferred embodiment of the invention the first neural model component may be represented by first adaptive weights, and the second neural model component may be represented by second adaptive weights. Such adaptive weights may also be denoted as parameters of the respective neural model component.

Preferably, the number of the second adaptive weights may be several times smaller than the number of the first adaptive weights. Because the training of the second neural model component represented by the second adaptive weights is given preference over the training of the first neural model component represented by the first adaptive weights, the number of weights to be adapted during the further training with the target system may be significantly reduced. This allows a more rapid learning for the target system.

Furthermore, the first adaptive weights may comprise a first weight matrix and the second adaptive weights may comprise a second weight matrix. The second weight matrix may be a diagonal matrix. For determining adaptive weights of the neural model the first weight matrix may be multiplied by the second weight matrix.

According to a preferred embodiment, the first neural model component may be not further trained. This allows to focus on the training of the second neural model component reflecting the properties varying between the source systems.

Alternatively, when further training the trained neural model, a first subset of the first adaptive weights may be substantially kept constant while a second subset of the first adaptive weights may be further trained. This allows a fine tuning of the first neural network component reflecting the properties shared by the systems even during the further training phase.

According to a preferred embodiment of the invention the neural model may be a reinforcement learning model, which allows an efficient learning of control strategies for dynamical systems.

Advantageously, the neural network may operate as a recurrent neural network. This allows for maintaining an internal state enabling an efficient detection of time dependent patterns when controlling a dynamical system. Moreover, many so-called Partially Observable Markov Decision Processes may be handled like so-called Markov Decision Processes by means of a recurrent neural network.

According to a preferred embodiment of the invention it may be determined, during training of the neural model, whether the neural model reflects a distinction between the properties shared by the source systems and the properties varying between the source systems. In dependence of that determination the training of the neural model can be affected. In particular, the training of the neural model on the basis of the operational data of the source systems may be finished if such a distinction is detected with a predetermined reliability.

Moreover, policies or control strategies resulting from the trained neural model may be run in a closed learning loop with the technical target system.

Additional features and advantages of the present invention are described in, and will be apparent from the following Detailed Description of the Invention and the Figures.

BRIEF DESCRIPTION OF THE DRAWINGS

Figure 1 shows a graphical illustration of an architecture of a recurrent neural network in accordance with an exemplary embodiment of the present invention.

Figure 2 shows a sketch of an exemplary embodiment of the invention comprising a target system, a plurality of source systems and a controller.

DETAILED DESCRIPTION OF THE PREFERRED EMBODIMENT

According to the present invention a target system is controlled not only by means of operational data of that target system but also by means of operational data of a plurality of source systems. The target system and the source systems may be gas or wind turbines or other dynamical systems including simulation tools for simulating a dynamical system.

Preferably, the source systems are chosen to be similar to the target system. In that case the operational data of the source systems and a neural model trained by means of them are a good starting point for a neural model of the target system. With the usage of operational data or other information from other, similar technical systems the amount of operational data required for learning an efficient control strategy or policy for the target system can be reduced considerably. The inventive approach increases the overall data efficiency of the learning system and significantly reduces the amount of data required before a first data driven control strategy can be derived for a newly commissioned target system.

According to a preferred embodiment of the invention a gas turbine should be controlled as a target system by means of a neural network pre-trained with operational data from a plurality of similar gas turbines as source systems.

The source systems may comprise the target system at a different time, e.g. before maintenance of the target system or before exchange of a system component etc.. Vice versa, the target system may be one of the source systems at a later time. The neural network is preferably implemented as a recurrent neural network.

Instead of training a distinct neural model for each of the source systems separately, a joint neural model for the family of similar source systems is trained based on operational data of all systems. That neural model comprises as a first neural model component a global module which allows operational knowledge to be shared across all source systems. Moreover, the neural model comprises as a second neural model component source-system-specific modules which enable the neural model to fine-tune for each source system individually. In this way, it is possible to learn better neural models, and therefore, control strategies or policies even for systems with scarce data, in particular for a target system similar to the source systems.

Let $I_{source}$ and $I_{target}$ denote two sets of system-specific identifiers of similar dynamical systems. The identifiers from the set $I_{source}$ each identify one of the source systems while the identifiers from the set $I_{target}$ identify the target system. It is assumed that the source systems have been observed sufficiently long such that there is enough operational data available to learn an accurate neural model of the source systems while, in contrast, there is only a small amount of operational data of the target system available. Since the systems have similar dynamical properties, transferring knowledge from the well-observed source systems to the scarcely observed target system is an advantageous approach to improve the model quality of the latter.

Let $s_1 \in S$ denote an initial state of the dynamical systems considered where $S$ denotes a state space of the dynamical systems, and let $a_1,...,a_T$ denote a $T$-step sequence of actions with $a_t \in A$ being an action in an action space $A$ of the dynamical systems at a time step $t$. Furthermore, let $h_1,...,h_{T+1}$ denote a hidden state sequence of the recurrent neural network. Then a recurrent neural network model of a single dynamical system, which yields a successor state sequence $\hat{s}_2,...,\hat{s}_{T+1}$, may be defined by the following equations

$$h_1 = \sigma_h(W_{hs}s_1 + b_1)$$

$$h_{t+1} = \sigma_h(W_{ha}a_t + W_{hh}h_t + b_h)$$

$$\hat{s}_{t+1} = W_{sh}h_{t+1} + b_s$$

where $W_{vu} \in \mathbb{R}^{n_v \times n_u}$ is a weight matrix from layer $u$ to layer $v$, the latter being layers of the recurrent neural network. $b_v \in \mathbb{R}^v$ is a bias vector of layer $v$, $n_v$ is the size of layer $v$ and $\sigma(\cdot)$ is an elementwise nonlinear function, e.g. $\tanh(\cdot)$. The $W_{uv}$ and the $b_v$ can be regarded as adaptive weights which are adapted during the learning process of the recurrent neural network.

In order to enable knowledge transfer from the source systems to the target system, the state transition $W_{hh}h_t$, which describes the temporal evolution of the states ignoring external forces, and the effect of an external force $W_{ha}a_t$ may be modified in order to share knowledge common to all source systems while yet being able to distinguish between the peculiarities of each source system. Therefore, the weight matrix $W_{hh}$ is factored yielding

$$W_{hh} \approx W_{hf_h}\mathrm{diag}\big(W_{f_hz}z\big)W_{f_hh}$$

where $z \in \{e_1,...,e_{|I_{source} \cup I_{target}|}\}$ is an Euclidean basis vector having a "1" at the position $i \in I_{source} \cup I_{target}$ and "0"s elsewhere. I.e. the vector $z$ carries the information by means of which the recurrent neural network can distinguish the specific source systems. In consequence, $z$ acts as a column selector of $W_{fhz}$ such that there is a distinct set of parameters $W_{fhz}z$ allocated for each source system. The transformation is therefore a composition of the adaptive weights $W_{hfh}$ and $W_{fhh}$, which are shared among all source systems, and the adaptive weights $W_{fhz}$ specific to each source system.

The same factorization technique is applied to $W_{ha}$ yielding

$$W_{ha} \approx W_{hf_a}\mathrm{diag}\big(W_{f_az}z\big)W_{f_aa}.$$

The resulting factored tensor recurrent neural network is then described by the following equations:

$$h_1 = \sigma_h(W_{hs}s_1 + b_1)$$

$$h_{t+1} = \sigma_h\big(W_{hf_a}\mathrm{diag}\big(W_{f_az}z\big)W_{f_aa}a_t + W_{hf_h}\mathrm{diag}\big(W_{f_hz}z\big)W_{f_hh}h_t + b_h\big)$$

$$s_{t+1} = W_{sh}h_{t+1} + b_s \,.$$

Thus, the adaptive weights $W_{hf_h}$, $W_{f_hh}$, $W_{hf_a}$, $W_{f_aa}$, $b_h$, $W_{sh}$, and $b_s$ refer to properties shared by all source systems and the adaptive weights of the diagonal matrices diag ($W_{f_hz}$ z) and diag ($W_{f_az}$ z) refer to properties varying between the source systems. I.e. the adaptive weights $W_{hf_h}$, $W_{f_hh}$, $W_{hf_a}$, $W_{f_aa}$, $b_h$, $W_{sh}$, and $b_s$ represent the first neural model component while the adaptive weights diag ($W_{f_hz}$ z) and diag ($W_{f_az}$ z) represent the second neural model component. As the latter adaptive weights are diagonal matrices they comprise much less parameters than the first adaptive weights. I.e. the training of the second neural model component requires less time and/or less operational data than the training of the first neural model component.

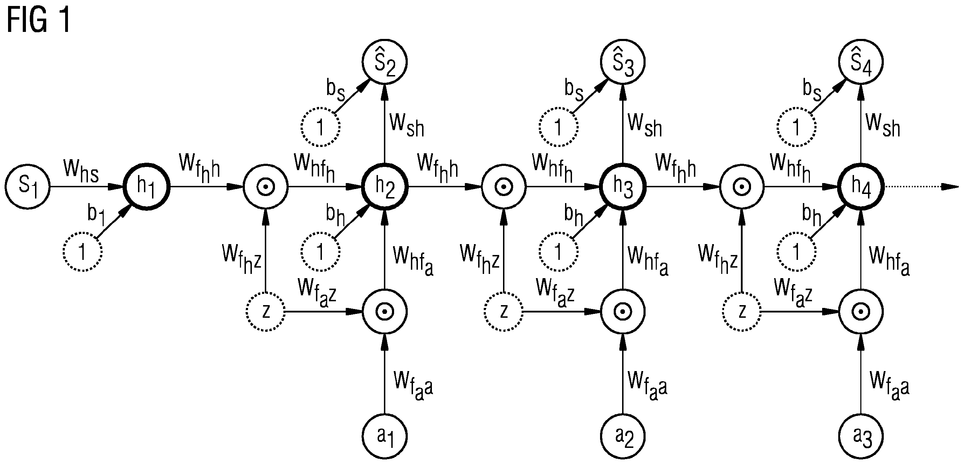

Figure 1 illustrates a graphical representation of the factored tensor recurrent neural network architecture described above. The dotted nodes in figure 1 indicate identical nodes which are replicated for convenience. The nodes having the ⊙-symbol in their centers are "multiplication nodes", i.e. the input vectors of the nodes are multiplied component-wise. The standard nodes, in contrast, imply the summation of all input vectors. Bold bordered nodes indicate the use of an activation function, e.g. "tanh" (·).

Apart from the above described factorizations of the weight matrices additional or alternative representations may be used. E.g.:

-   The weight matrices $W_{hf_h}$, $W_{f_hh}$, $W_{hf_a}$, and/or $W_{f_aa}$ may be restricted to symmetric form.

-   A system specific matrix diag ($W_{f_hz}$ z) may be added to the weight matrix $W_{hh}$ shared by the source systems. The latter may be restricted to a low rank representation $W_{hh} \approx W_{hu} W_{uh}$. Moreover, the $W_{uh}$ may be restricted to symmetric form.

-   The bias vector $b_h$ may be made system specific, i.e. depend on z.

-   When merging information of multiple source or target systems into a neural model, issues may occur due to miscalibrated sensors from which the operational data are derived or by which the actions are controlled. In order to cope with artifacts resulting from miscalibrated sensors the weight matrix $W_{sh}$ and/or the bias vector $b_s$ may be made system specific, i.e. depend on the vector z. In particular, these weight matrices may comprise a z-dependent diagonal matrix.

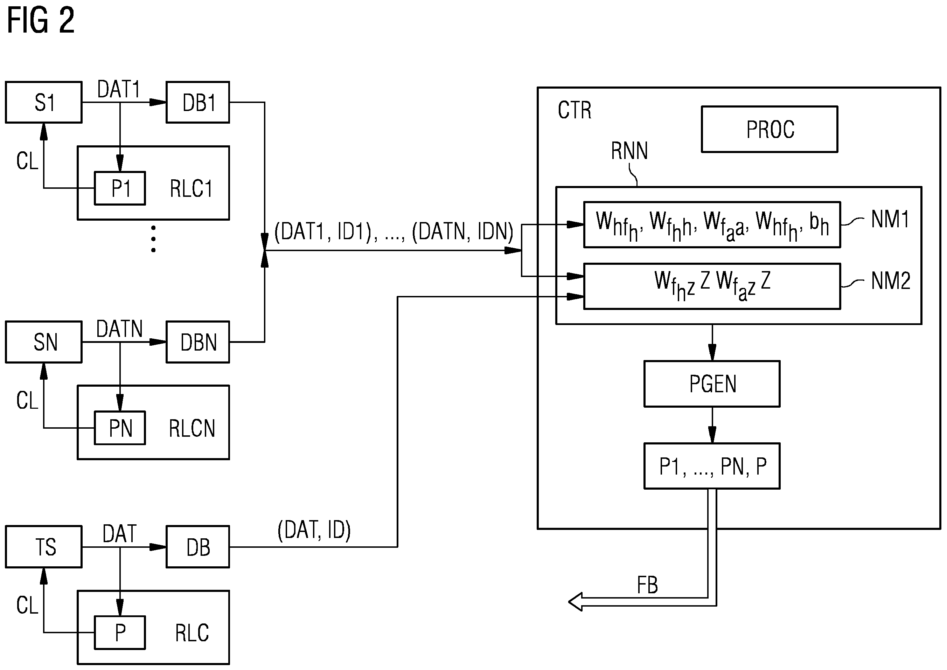

Figure 2 shows a sketch of an exemplary embodiment of the invention comprising a target system TS, a plurality of source systems S1,...,SN, and a controller CTR. The target system TS may be e.g. a gas turbine and the source systems S1,...,SN may be e.g. gas turbines similar to the target system TS.

Each of the source systems S1,...,SN is controlled by a reinforcement learning controller RLC1,RLC2,..., or RLCN, respectively, the latter being driven by a control strategy or policy P1,P2,..., or PN, respectively. Source system specific operational data DAT1,..., DATN of the source systems S1,...,SN are stored in data bases DB1,...,DBN. The operational data DAT1,..., DATN are distinguished by source system specific identifiers ID1,..., IDN from $I_{source}$. Moreover, the respective operational data DAT1,DAT2,..., or DATN, are processed according to the respective policy P1,P2,..., or PN in the respective reinforcement learning controller RLC1,RLC2,..., or RLCN. The control output of the respective policy P1,P2,..., or PN is fed back into the respective source system S1,..., or SN via a control loop CL, resulting in a closed learning loop for the respective reinforcement learning controller RLC1,RLC2,..., or RLCN.

Accordingly, the target system TS is controlled by a reinforcement learning controller RLC driven by a control strategy or policy P. Operational data DAT specific to the target system TS are stored in a data base DB. The operational data DAT are distinguished from the operational data DAT1,..., DATN of the source systems S1,...,SN by a target system specific identifier ID from $I_{target}$. Moreover, the operational data DAT are processed according to the policy P in the reinforcement learning controller RLC. The control output of the policy P is fed back into the target system TS via a control loop CL, resulting in a closed learning loop for the reinforcement learning controller RLC.

The controller CTR comprises a processor PROC, a recurrent neural network RNN, and a reinforcement learning policy generator PGEN. The recurrent neural network RNN implements a neural model comprising a first neural model component NM1 to be trained on properties shared by all source systems S1,...,SN and a second neural model component NM2 to be trained on properties varying between the source systems S1,...,SN, i.e. on source system specific properties. As already mentioned above, the first neural model component NM1 is represented by the adaptive weights $W_{hf_h}$, $W_{f_hh}$, $W_{hf_a}$, $W_{fa_a}$, $b_h$, $W_{sh}$, and $b_s$ while the second neural model component NM2 is represented by the adaptive weights diag ($W_{f_hz}$ z) and diag ($W_{f_az}$ z).

By means of the recurrent neural network RNN the reinforcement learning policy generator PGEN generates the policies or control strategies P1,...,PN, and P. A respective generated policy P1,...,PN, P is then fed back to a respective reinforcement learning controller RLC1,...,RLCN, or RLC, as indicated by means of a bold arrow FB in figure 2. With that, a learning loop is closed and the generated policies P1,...,PN and/or P are running in closed loop with the dynamical systems S1,...,SN and/or TS.

The training of the recurrent neural network RNN comprises two phases. In a first phase, a joint neural model is trained on the operational data DAT1,...,DATN of the source systems S1,...,SN. For this purpose, the operational data DAT1,...,DATN are transmitted together with the source system specific identifiers ID1,...,IDN from the databases DB1,...,DBN to the controller CTR. In this first training phase the first neural model component NM1 is trained on properties shared by all source systems S1,...,SN and the second neural model component NM2 is trained on properties varying between the source systems S1,...,SN. Here, the source systems S1,...,SN and their operational data DAT1,...,DATN are distinguished by means of the system-specific identifiers ID1,...,IDN from $I_{source}$ represented by the vector z.

In a second phase the recurrent neural network RNN is further trained by means of the operational data DAT of the target system TS. Here, the shared parameters $W_{hf_h}$, $W_{f_hh}$, $W_{hf_a}$, $W_{f_aa}$, $b_h$, $W_{sh}$, and $b_s$ representing the first neural model component NM1 and adapted in the first phase are reused and remain fixed while the system specific parameters diag ($W_{f_hz}$ z) and diag ($W_{f_az}$ z) representing the second neural model component NM2 are further trained by means of the operational data DAT of the target system TS. The recurrent neural network RNN distinguishes the operational data DAT of the target system TS from the operational data DAT1,...,DATN of the source systems S1,...,SN by means of the target system specific identifier ID.

Due to the fact that the general structure of the dynamics of the family of similar source systems S1,...,SN is learned in the first training phase, adapting the system specific parameters of a possibly unseen target system TS can be completed within seconds despite a high complexity of the overall model. At the same time, only little operational data DAT are required to achieve a low model error on the target system TS. In addition, the neural model of the target system TS is more robust to overfitting, which appears as a common problem when only small amounts of operational data DAT are available, compared to a model that does not exploit prior knowledge of the source systems S1,...,SN. With the present invention only the peculiarities in which the target system TS differs from the source systems S1,...,SN remain to be determined.

There are a number of ways to design the training procedures in order to obtain knowledge transfer from source systems S1,...,SN to the target system TS including but not limited to the following variants:

Given a joint neural model which was trained on operational data DAT1,...,DATN from a sufficient number of source systems S1,...,SN, and given a new target system TS which is similar to the source systems S1,...,SN on which the joint neural model was trained, it becomes very data-efficient to obtain an accurate neural model for the similar target system TS. In this case, the shared parameters $W_{hf_h}$, $W_{f_hh}$, $W_{hf_a}$, $W_{f_aa}$, $b_h$, $W_{sh}$, and $b_s$ of the joint neural model can be frozen and only the systems specific parameters diag ($W_{f_hz}$ z) and diag ($W_{f_az}$ z) are further trained on the operational data DAT of the new target system TS. Since the number of system specific parameters is typically very small, only very little operational data is required for the second training phase. The underlying idea is that the operational data DAT1,...,DATN of a sufficient number of source systems S1,...,SN used for training the joint neural model contain enough information for the joint neural model to distinguish between the general dynamics of the family of source systems S1,...,SN and the source system specific characteristics. The general dynamics are encoded into the shared parameters $W_{hf_h}$, $W_{f_hh}$, $W_{hf_a}$, $W_{f_aa}$, $b_h$, $W_{sh}$, and $b_s$ allowing efficient transfer of the knowledge to the new similar target system TS for which only the few characteristic aspects need to be learned in the second training phase.

For a new target system TS which is not sufficiently similar to the source systems S1,...,SN on which the joint model was trained, the general dynamics learned by the joint neural model may differ too much from the dynamics of the new target system TS in order to transfer the knowledge to the new target system TS without further adaption of the shared parameters. This may also be the case if the number of source systems S1,...,SN used to train the joint neural model is too small in order to extract sufficient knowledge of the general dynamics of the overall family of systems.

In both cases, it may be advantageous to adapt the shared adaptive weights $W_{hf_h}$, $W_{f_hh}$, $W_{hf_a}$, $W_{f_aa}$, $b_h$, $W_{sh}$, and $b_s$ also during the second training phase. In this case the operational data DAT1,...,DATN used for training the joint neural model are extended by the operational data DAT from the new target system TS and all adaptive weights remain free for adaption also during the second training phase. The adaptive weights trained in the first training phase of the joint neural model are used to initialize a neural model of the target system TS, that neural model being a simple extension of the joint neural model containing an additional set of adaptive weights specific to the new target system TS. Thus, the time required for the second training phase can be significantly reduced because most of the parameters are already initialized to good values in the parameter space and only little further training is necessary for the extended joint neural model to reach convergence.

Variations of that approach include freezing a subset of the adaptive weights and using subsets of the operational data DAT1,...,DATN, DAT for further training. Instead of initializing the extended joint neural model with the adaptive weights of the initial joint neural model, those adaptive weights may be initialized randomly, and the extended neural model may be further trained from scratch with data from all systems S1,...,SN, and TS.

The invention allows to leverage information or knowledge from a family of source systems S1,...,SN with respect to system dynamics enabling data-efficient training of a recurrent neural network simulation for a whole set of systems of similar or same type. This approach facilitates a jump-start when deploying a learning neural network to a specific new target system TS, i.e. it achieves a significantly better optimization performance with little operational data DAT of the new target system TS compared to a learning model without such a knowledge transfer.

Further advantages of such information sharing between learning models for similar systems comprise a better adjustability to environmental conditions, e.g. if the different systems are located within different climes. The learning model could also generalize towards different kinds of degradation, providing improved optimization capabilities for rare or uncommon situations because the combined information, gathered from all systems can be utilized.

## Claims

1. A method for controlling a target system (TS) on the basis of operational data (DAT1, ..., DATN) of a plurality of source systems (S1, ..., SN), comprising:

   a) receiving operational data (DAT1, ..., DATN) of the source systems (S1, ..., SN), the operational data being distinguished by source system specific identifiers (ID1, ..., IDN),
   b) training by means of a neural network (RNN) a neural model on the basis of the received operational data (DAT1, ..., DATN) of the source systems (S1, ..., SN) taking into account the source system specific identifiers (ID1, ..., IDN), where a first neural model component (NM1) is trained on properties shared by the source systems (S1, ..., SN) and a second neural model component (NM2) is trained on properties varying between the source systems (S1, ..., SN),
   c) receiving operational data (DAT) of the target system,
   d) further training the trained neural model (RNN) on the basis of the operational data (DAT) of the target system (TS), where a further training of the second neural model component (NM2) is given preference over a further training of the first neural model component (NM1), and
   e) controlling the target system (TS) by means of the further trained neural network (RNN).

2. The method as claimed in claim 1, wherein
   the first neural model component (NM1) is represented by first adaptive weights ($W_{hf_h}, W_{f_hh}, W_{f_aa}, W_{hf_a}, b_h$), and
   the second neural model component (NM2) is represented by second adaptive weights ($W_{f_hz}Z, W_{f_az}Z$).

3. The method as claimed in claim 2, wherein
   the number of the first adaptive weights ($W_{hf_h}, W_{f_hh}, W_{f_aa}, W_{hf_a}, b_h$), is several times greater than the number of the second adaptive weights ($W_{f_hz}Z, W_{f_az}Z$).

4. The method as claimed in claim 2, wherein
   the first adaptive weights ($W_{hf_h}, W_{f_hh}, W_{f_aa}, W_{hf_a}, b_h$) comprise a first weight matrix and the second adaptive weights ($W_{f_hz}Z, W_{f_az}Z$) comprise a second weight matrix.

5. The method as claimed in claim 4, wherein
   for determining adaptive weights ($W_{hf_h}, W_{f_hh}, W_{f_aa}, W_{hf_a}, b_h, W_{f_hz}Z, W_{f_az}Z$) of the neural model the first weight matrix is multiplied by the second weight matrix.

6. The method as claimed in claim 4, wherein
   the second weight matrix is a diagonal matrix.

7. The method as claimed in claim 1, wherein
   the first neural model component (NM1) is not further trained.

8. The method as claimed in claim 2, wherein
   when further training the trained neural model (RNN) a first subset of the first adaptive weights

$(W_{hf_h}, W_{f_hh}, W_{f_aa}, W_{hf_a}, b_h)$ is substantially kept constant while a second subset of the first adaptive weights $(W_{hf_h}, W_{f_hh}, W_{f_aa}, W_{hf_a}, b_h)$ is further trained.

9. The method as claimed in claim 1, wherein
the neural model is a reinforcement learning model.

10. The method as claimed in claim 1, wherein
the neural network (RNN) operates as a recurrent neural network.

11. The method as claimed in claim 1, wherein
during training of the neural model
determining whether the neural model reflects a distinction between the properties shared by the source systems (S1, ..., SN) and the properties varying between the source systems (SN, ..., SN), and
affecting the training of the neural model in dependence of that determination.

12. The method as claimed in claim 1, wherein
policies (P1, ..., PN, P) resulting from the trained neural model are run in a closed learning loop with the technical target system (TS).

13. A controller for controlling a target system (TS) on the basis of operational data (DAT1, ..., DATN) of a plurality of source systems (S1, ..., SN), adapted to perform the method of claim 1.

14. A computer program product for controlling a target system on the basis of operational data (DAT1, ..., DATN) of a plurality of source systems (S1, ..., SN), adapted to perform the method of claim 1.

**Patentansprüche**

1. Verfahren zur Steuerung eines Zielsystems (TS) auf der Basis von Betriebsdaten (DAT1, ..., DATN) mehrerer Quellsysteme (S1, ..., SN), umfassend:

   a) Empfangen von Betriebsdaten (DAT1, ..., DATN) der Quellsysteme (S1, ..., SN), wobei sich die Betriebsdaten durch quellsystemspezifische Kennungen (ID1, ..., IDN) unterscheiden,
   b) Trainieren, mittels eines neuronalen Netzes (RNN), eines neuronalen Modells auf der Basis der empfangenen Betriebsdaten (DAT1, ..., DATN) der Quellsysteme (S1, ..., SN) unter Berücksichtigung der quellsystemspezifischen Kennungen (ID1, ..., IDN), wobei eine erste Komponente (NM1) des neuronalen Modells an Eigenschaften trainiert wird, die den Quellsystemen (S1, ..., SN) gemeinsam sind, und eine zweite Komponente (NM2) des neuronalen Modells an Eigenschaften trainiert wird, die zwischen den Quellsystemen (S1, ..., SN) variieren,
   c) Empfangen von Betriebsdaten (DAT) des Zielsystems,
   d) weiteres Trainieren des trainierten neuronalen Modells (RNN) auf der Basis der Betriebsdaten (DAT) des Zielsystems (TS), wobei einem weiteren Trainieren der zweiten Komponente (NM2) des neuronalen Modells der Vorrang vor einem weiteren Trainieren der ersten Komponente (NM1) des neuronalen Modells gegeben wird, und
   e) Steuern des Zielsystems (TS) mittels des weiter trainierten neuronalen Netzes (RNN).

2. Verfahren nach Anspruch 1, wobei
die erste Komponente (NM1) des neuronalen Modells durch erste adaptive Gewichte $(W_{hf_h}, W_{f_hh}, W_{f_aa}, W_{hf_a}, b_h)$ repräsentiert wird und
die zweite Komponente (NM2) des neuronalen Modells durch zweite adaptive Gewichte $(W_{f_hz}Z, W_{f_az}Z)$ repräsentiert wird.

3. Verfahren nach Anspruch 2, wobei
die Anzahl der ersten adaptiven Gewichte $(W_{hf_h}, W_{f_hh}, W_{f_aa}, W_{hf_a}, b_h)$ ein Mehrfaches der Anzahl der zweiten adaptiven Gewichte $(W_{f_hz}Z, W_{f_az}Z)$ beträgt.

4. Verfahren nach Anspruch 2, wobei
die ersten adaptiven Gewichte $(W_{hf_h}, W_{f_hh}, W_{f_aa}, W_{hf_a}, b_h)$ eine erste Gewichtsmatrix umfassen und die zweiten adaptiven Gewichte $(W_{f_hz}Z, W_{f_az}Z)$ eine zweite Gewichtsmatrix umfassen.

5. Verfahren nach Anspruch 4, wobei zum Bestimmen adaptiver Gewichte ($W_{hf_h}$, $W_{f_hh}$, $W_{f_aa}$, $W_{hf_a}$, $b_h$, $W_{f_hz}Z$, $W_{f_az}Z$) des neuronalen Modells die erste Gewichtsmatrix mit der zweiten Gewichtsmatrix multipliziert wird.

6. Verfahren nach Anspruch 4, wobei die zweite Gewichtsmatrix eine Diagonalmatrix ist.

7. Verfahren nach Anspruch 1, wobei die erste Komponente (NM1) des neuronalen Modells nicht weiter trainiert wird.

8. Verfahren nach Anspruch 2, wobei, wenn das trainierte neuronale Modell (RNN) weiter trainiert wird, eine erste Teilmenge der ersten adaptiven Gewichte ($W_{hf_h}$, $W_{f_hh}$, $W_{f_aa}$, $W_{hf_a}$, $b_h$) im Wesentlichen konstant gehalten wird, während eine zweite Teilmenge der ersten adaptiven Gewichte ($W_{hf_h}$, $W_{f_hh}$, $W_{f_aa}$, $W_{hf_a}$, $b_h$) weiter trainiert wird.

9. Verfahren nach Anspruch 1, wobei das neuronale Modell ein Verstärkungslernmodell ist.

10. Verfahren nach Anspruch 1, wobei das neuronale Netz (RNN) als ein rekurrentes neuronales Netz funktioniert.

11. Verfahren nach Anspruch 1, wobei während des Trainierens des neuronalen Modells bestimmt wird, ob das neuronale Modell eine Unterscheidung zwischen den Eigenschaften, die den Quellsystemen (S1, ..., SN) gemeinsam sind, und den Eigenschaften, die zwischen den Quellsystemen (S1, ..., SN) variieren, widerspiegelt, und das Trainieren des neuronalen Modells in Abhängigkeit von dieser Bestimmung beeinflusst wird.

12. Verfahren nach Anspruch 1, wobei Politiken (P1, ..., PN, P), die aus dem trainierten neuronalen Modell resultieren, in einer geschlossenen Lernschleife mit dem technischen Zielsystem (TS) ausgeführt werden.

13. Steuergerät zum Steuern eines Zielsystems (TS) auf der Basis von Betriebsdaten (DAT1, ..., DATN) mehrerer Quellsysteme (S1, ..., SN), welches dafür ausgelegt ist. das Verfahren nach Anspruch 1 auszuführen.

14. Computerprogrammprodukt zum Steuern eines Zielsystems auf der Basis von Betriebsdaten (DAT1, ..., DATN) mehrerer Quellsysteme (S1, ..., SN), welches dafür ausgelegt ist. das Verfahren nach Anspruch 1 auszuführen.

**Revendications**

1. Procédé de commande d'un système cible (TS) sur la base de données opérationnelles (DAT1, ..., DATN) d'une pluralité de systèmes sources (S1, ..., SN), comprenant les étapes consistant à :

   a) recevoir des données opérationnelles (DAT1, ..., DATN) des systèmes sources (S1, ..., SN), les données opérationnelles étant distinguées par des identifiants spécifiques de systèmes sources (ID1, ..., IDN),
   b) entraîner, grâce à un réseau neuronal (RNN), un modèle neuronal sur la base des données opérationnelles reçues (DAT1, ..., DATN) des systèmes sources (S1, ..., SN) prenant en compte les identifiants spécifiques de systèmes sources (ID1, ..., IDN), où un premier composant de modèle neuronal (NM1) est entraîné sur des propriétés partagées par les systèmes sources (S1, ..., SN) et un second composant de modèle neuronal (NM2) est entraîné sur des propriétés variant entre les systèmes sources (S1, ..., SN),
   c) recevoir des données opérationnelles (DAT) du système cible,
   d) soumettre à un entraînement supplémentaire le modèle neuronal entraîné (RNN) sur la base des données opérationnelles (DAT) du système cible (TS), où un entraînement supplémentaire du second composant de modèle neuronal (NM2) reçoit une préférence sur un entraînement supplémentaire du premier composant de modèle neuronal (NM1), et
   e) commander le système cible (TS) grâce au réseau neuronal entraîné supplémentaire (RNN).

2. Procédé selon la revendication 1, dans lequel

le premier composant de modèle neuronal (NM1) est représenté par des premières pondérations adaptatives ($W_{hf_h}$,$W_{f_hh}$,$W_{f_aa}$,$W_{hf_a}$,$b_h$), et

le second composant de modèle neuronal (NM2) est représenté par des secondes pondérations adaptatives ($W_{f_hz}Z$, $W_{f_az}Z$).

**3.** Procédé selon la revendication 2, dans lequel
le nombre des premières pondérations adaptatives ($W_{hf_h}$,$W_{f_hh}$,$W_{f_aa}$,$W_{hf_a}$,$b_h$) est plusieurs fois supérieur au nombre des secondes pondérations adaptatives ($W_{f_hz}Z$, $W_{f_az}Z$).

**4.** Procédé selon la revendication 2, dans lequel
les premières pondérations adaptatives ($W_{hf_h}$,$W_{f_hh}$,$W_{f_aa}$,$W_{hf_a}$,$b_h$) comprennent une première matrice de pondération et les secondes pondérations adaptatives ($W_{f_hz}Z$, $W_{f_az}Z$) comprennent une seconde matrice de pondération.

**5.** Procédé selon la revendication 4, dans lequel
pour déterminer les pondérations adaptatives ($W_{hf_h}$,$W_{f_hh}$,$W_{f_aa}$,$W_{hf_a}$,$b_h$,$W_{f_hz}Z$, $W_{f_az}Z$) du modèle neuronal, la première matrice de pondération est multipliée par la seconde matrice de pondération.

**6.** Procédé selon la revendication 4, dans lequel
la seconde matrice de pondération est une matrice diagonale.

**7.** Procédé selon la revendication 1, dans lequel
le premier composant de modèle neuronal (NM1) n'est pas soumis à un entraînement supplémentaire.

**8.** Procédé selon la revendication 2, dans lequel
lors de l'entraînement supplémentaire du modèle neuronal entraîné (RNN), un premier sous-ensemble des premières pondérations adaptatives ($W_{hf_h}$,$W_{f_hh}$,$W_{f_aa}$,$W_{hf_a}$,$b_h$) est sensiblement maintenu constant tandis qu'un second sous-ensemble des premières pondérations adaptatives ($W_{hf_h}$,$W_{f_hh}$,$W_{f_aa}$,$W_{hf_a}$,$b_h$) est soumis à un entraînement supplémentaire.

**9.** Procédé selon la revendication 1, dans lequel
le modèle neuronal est un modèle d'entraînement de renforcement.

**10.** Procédé selon la revendication 1, dans lequel
le réseau neuronal (RNN) fonctionne comme un réseau neuronal récurrent.

**11.** Procédé selon la revendication 1, dans lequel
pendant l'entraînement du modèle neuronal
déterminer si le modèle neuronal reflète une distinction entre les propriétés partagées par les systèmes sources (S1, ..., SN) et les propriétés variant entre les systèmes sources (SN, ..., SN), et
influencer l'entraînement du modèle neuronal en fonction de cette détermination.

**12.** Procédé selon la revendication 1, dans lequel
des politiques (P1, ..., PN, P) résultant du modèle neuronal entraîné sont exécutées dans une boucle d'entraînement fermée avec le système cible technique (TS).

**13.** Dispositif de commande permettant de commander un système cible (TS) sur la base des données opérationnelles (DAT1, ..., DATN) d'une pluralité de systèmes sources (S1, ..., SN), adapté pour mettre en oeuvre le procédé selon la revendication 1.

**14.** Produit de programme informatique permettant de commander un système cible sur la base de données opérationnelles (DAT1, ..., DATN) d'une pluralité de systèmes sources (S1, ..., SN), adapté pour mettre en oeuvre le procédé selon la revendication 1.

FIG 1

EP 3 117 274 B1

# FIG 2

EP 3 117 274 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7330804 B2

**Non-patent literature cited in the description**

- **CHAN et al.** Training recurrent network with block-diagonal approximated Levenberg-Marquardt algorithm. *INTERNATIONAL JOINT CONFERENCE ON NEURAL NETWORKS IJCNN '99,* 10 July 1999, vol. 3, 1521-1526

- **PUSKORIUS et al.** Neurocontrol of Nonlinear Dynamical Systems with Kalman Filter Trained Recurrent Networks. *IEEE TRANSACTIONS ON NEURAL NETWORKS,* 01 March 1994, vol. 5 (2), 279-297
- Enhanced Multi-Stream Kalman Filter Training for Recurrent Networks. **FELDKAMP et al.** Nonlinear Modeling. Springer, 31 December 1998, 29-53